# EUROPÄISCHE PATENTSCHRIFT

(11) **EP 4 319 939 B1**
(45) Veröffentlichungstag und Bekanntmachung des Hinweises auf die Patenterteilung: **31.12.2025**
(21) Anmeldenummer: 22718685.5
(22) Anmeldetag: 28.03.2022
(51) Int. Cl.: B25J 17/02, B23K 26/342, B23K 26/21, B25J 19/06, B23K 26/03, B23K 37/006, B23K 26/14

(54) **LASERBEARBEITUNGSKOPF MIT EINEM GEHÄUSE UND EINER SCHWEISSDÜSE**
LASER MACHINING HEAD HAVING A HOUSING AND A WELDING NOZZLE
TÊTE D'USINAGE AU LASER POURVUE D'UN BOÎTIER ET D'UNE BUSE DE SOUDAGE

(30) Priorität: 07.04.2021 DE 102021203451
(43) Veröffentlichungstag der Anmeldung: 14.02.2024
(73) Patentinhaber: Fraunhofer-Gesellschaft zur Förderung der angewandten Forschung e.V., 80686 München (DE)
(72) Erfinder: HILLIG, Holger, 01277 Dresden (DE); KAUBISCH, Marc, 01277 Dresden (DE); LEINGRUBER, Marvin, 01277 Dresden (DE)
(74) Vertreter: Pfenning, Meinig & Partner mbB
(86) Internationale Anmeldenummer: PCT/EP2022/058089
(87) Internationale Veröffentlichungsnummer: WO 2022/214346

(56) Entgegenhaltungen:
- CN-U- 206 982 040
- DE-A1- 102013 101 284
- FR-A1- 2 190 568
- US-A1- 2006 153 668
- US-A1- 2017 355 037
- US-A1- 2018 154 483
- US-A1- 2020 368 815

## Beschreibung

Die Erfindung betrifft einen Laserbearbeitungskopf mit einem Gehäuse und einer Schweißdüse, der beim Reparieren, Beschichten sowie der additiven Fertigung mittlerer und großer Bauteile, z.B. aus dem Werkzeug und Formenbau, Kraftwerksbau, in der Atomenergietechnik, beim Turbinen-, Maschinen- und Anlagen-, Schiffbau, in der Stahlindustrie, Öl & Gas-Industrie, beim Pipeline-Bau, und in der Agrarindustrie eingesetzt werden kann.

Das Laserauftragsschweißen wird zunehmend für das Beschichten sowie für die additive Fertigung eingesetzt. Aufgrund der hohen Kosten und begrenzten Produktivität ist die Anwendbarkeit jedoch auf kleinere Bauteile begrenzt.

Um die Auftragsrate zu steigern sind hohe Laserleistungen erforderlich. Beim Laserauftragsschweißen mit pulverförmigen Zusatzwerkstoffen (LPA) können richtungsunabhängige Prozesse bereits mit 10 kW bis 20 kW Laserleistung durchgeführt werden und entsprechend hohe Auftragsraten werden erzielt werden (z.B. ca. 14 kg/h Inconel 625 bei 20 kW). Nachteilig sind dabei aber die hohen Kosten für Pulverherstellung sowie auch hohe Kosten und die Gesundheitsgefährdung durch das Pulverhandling.

Beim Laserauftragsschweißen mit drahtförmigem Zusatzwerkstoff (LDA) sind die Auftragsraten bisher geringer oder es kann nur richtungsabhängig gearbeitet werden. Bei richtungsunabhängig einsetzbaren Schweißköpfen ist die Laserleistung meist bis von 4 kW oder 6 kW begrenzt, da hier komplexe und teure Optiken mit Strahlteiler (COAXwire) oder Ringstrahl Optiken (Precitec, CO-AXprinter) verwendet werden, um den Laserstrahl von mehreren Seiten koaxial um den zentrisch zugeführten Draht anordnen zu können, um ein richtungsunabhängiges Arbeiten zu ermöglichen. Ein weiteres System ist ein Bearbeitungskof Fiberweld-DH der Fa. Lasermech, der für eine Laserleistung bis 30 kW angeboten wird, der aber sehr komplex, groß gebaut ist und ein hohes Gewicht hat und somit für bestimmte Einsatzwecke nachteilig ist.

Ein neues Konzept, das sowohl beim richtungsunabhängigen Arbeiten wie auch für höchste Laserleistungen einsetzbar ist, nutzt der COAXwire-QuattroCirc LDA Kopf. Bei diesem Kopf wird ein zentrischer Laserstrahl einer kostengünstigen Standard Optik verwendet und die Zusatzwerkstoffzufuhr erfolgt über mehrere (2, 3 oder mehr) koaxial um den Laserstrahl angeordnete Drahtzuführungen, die die Drähte seitlich dem Schmelzbad zuführen. Die Drahtzuführeinrichtungen können als eine Drahtdüsen-Baugruppe zusammengefasst werden, die koaxial um den Laserstrahl angeordnet ist, einen Arbeitsabstand zwischen von 10 bis 40 mm zum Bauteil/Schmelzbad aufweist und wassergekühlt ist. Diese Drahtdüse wird mittels einer Adaption direkt an die Schweißoptik montiert, der Laserstrahlgang ist dabei geschlossen und ein Schutzgas kann im oberen Bereich zum Schutz der Optik als auch zur Abschirmung des Schmelzbades vor Luftsauerstoff eingeleitet werden. Die Justage erfolgt über eine in die Adaption integrierte xyz-Verschiebeeinheit zum koaxialen Ausrichten der Drahtzufuhr zum Laserstrahl.

Optional kann in die Verstelleinheit auch eine Abschaltsensorik integriert werden, die beim ungewollten Festschweißen der Drähte am Bauteil den Prozess stoppt und so Beschädigungen verhindert.

Als Zusatzwerkstoff können jeweils die gleichen metallischen Drahtwerkstoffe verwendet werden. Es können aber auch verschiedene metallische Drahtwerkstoffe (z.B.: Massivdrähte, Fülldrähte) eingesetzt werden, um insitu ein gemischtes Schweißgut aufzutragen. Neben soliden Drähten können auch Fülldrähte verwendet werden.

Zusätzlich zu den Drahtwerkstoffen können auch Pulverwerkstoffe zugeführt werden, um z.B. auch Werkstoffe, die nicht drahtförmig herstellbar sind, zuführen zu können und zum Beispiel insitu ein Schweißgut aus zwei Komponenten z.B. Hartstoff (Pulver) Binder (Draht) herzustellen.

Weiterhin kann die Drahtzufuhreinrichtung auch mit wechselbaren Einsätzen ausgerüstet werden, die zum einen aus festerem Material hergestellt sind und somit gegenüber der Drahtreibung unempfindlicher sind und bei Bedarf als Verschleißteil ausgewechselt werden können.

Als Laserstrahlquelle können Hochleistungs-Festkörperlaser z.B. Diodenlaser, Faserlaser und Scheibenlaser mit Laserleistung größer 200 W verwendet werden.

Optional ist eine Heißdrahtvariante über Widerstandserwärmung der Drähte zwischen Drahtdüse und Werkstück möglich. Dabei fließt der Strom vom Bearbeitungskopf über die Drähte zum Werkstück. -> Draht dient als elektrischer Widerstand und wird vorgewärmt.

Die Förderung der Drähte kann entweder über direkt am Schweißkopf montierte Kompakt-Drahtförderer oder durch mehrere extern aufgestellte Drahtförderer realisiert werden.

Alternativ zu mehreren Drahtförderern kann auch ein einziger Drahtförderer eingesetzt werden, der zur Förderung mehrerer Drähte ausgerüstet ist.

Zur Überwachung und ggf. zum Regeln der Drahtzufuhr können im Schweißkopf bzw. den am Schweißkopf montierten Drahtförderern Drahtlaufsensoren eingebaut sein.

Zur Bearbeitung sehr reaktiver Zusatzwerkstoffe (z.B. Titanlegierungen) kann der Schweißkopf mit einer äußeren, koaxial um die Drahtdüsen-Baugruppe angeordneten Schutzgasdüse ausgerüstet werden.

Bei den bekannten technischen Lösungen wird aber der Sicherheitsaspekt nur ungenügend berücksichtigt, was insbesondere die Betriebssicherheit betrifft. Auch in direkte Überwachung der Bearbeitungsqualität ist nur limitiert möglich.

So sind aus US 2018/0154483 A1 ein Mehrdrahtzuführungsverfahren sowie ein System zum Bilden einer Legierungsprobe zur additiven Fertigung bekannt.

Aus US 2006/0153668 A1 geht eine Laserbearbeitungskopf mit Interface hervor.

US 2020/0368815 A1 (beschreibend den Oberbegriff des Anspruchs 1) betrifft die additive Fertigung mit thermischer Beeinflussung von Werkstücken.

Die Offenbarung von DE 10 2013 101 284 A1 betrifft eine Vorrichtung und ein Verfahren zum Bearbeiten von Werkstücken, Schweißgerät und Verfahren zur Beeinflussung der Bewegung eines Schweißkopfes.

Es ist daher Aufgabe der Erfindung, Möglichkeiten für eine verbesserte Betriebssicherheit und Qualitätsüberwachung beim Laserauftragsschweißen anzugeben.

Erfindungsgemäß wird diese Aufgabe mit einem Laserbearbeitungskopf, der die Merkmale des Anspruchs 1 aufweist, gelöst. Vorteilhafte Ausgestaltungen und Weiterbildungen der Erfindung können mit in abhängigen Ansprüchen bezeichneten Merkmalen realisiert werden.

Das Gehäuse und die Schweißdüse sind innen hohl. Durch beide ist ein Laserstrahl in Richtung auf eine Oberfläche geführt. Zumindest in der Schweißdüse ist mindestens ein Kanal durch den Schweißzusatzwerkstoff in Richtung der Oberfläche auf der Schweißzusatzwerkstoff mittels Auftragsschweißen aufgebracht werden soll in den Einflussbereich des Laserstrahls förderbar. Mit der Energie des Laserstrahls ist zugeführter Schweißzusatzwerkstoff im Einflussbereich des Laserstrahls aufschmelzbar.

Am Laserbearbeitungskopf ist mindestens das folgende Merkmal realisiert:
Eine ektronische Kamera ist so angeordnet und ausgebildet, dass sie den Bereich der Zuführung von Schweißzusatzwerkstoff im Bereich der Düsenöffnung der Schweißdüse erfassen kann. Die elektronische Kamera ist mit der elektronischen Regel- und Steuereinheit verbunden und die elektronische Regel- und Steuereinheit dabei ausgebildet, anhand der erfassten Abbildung im Bereich der Düsenöffnung der Schweißdüse die Vorschubbewegung mindestens eines drahtförmigen Zusatzwerkstoffs oder den Volumenstrom von zugeführtem pulverförmigen Schweißzusatzwerkstoff zu beeinflussen.

Entsprechend der Erfindung ist im Laserbearbeitungskopf eine Kameraeinkopplung vorhanden, die ausgebildet ist, eine Abbildung des Bereichs der Düsenöffnung der Schweißdüse auf die elektronische Kamera zu projezieren. In der elektronischen Regel- und Steuereinheit ist dazu eine Bilderkennungserkennungssoftware integriert, die ausgebildet ist, drahtförmigen oder pulverförmigen Schweißzusatzwerkstoff zu erkennen. Dabei wird zumindest die jeweilige Position der Stirnseite von drahtförmigem Schweißzusatzwerkstoff in Bezug zum Einflussbereich des Laserstrahls, in dem ein Schmelzen von Schweißzusatzwerkstoff möglich ist, bei drahtförmigem Schweißzusatzwerkstoff bestimmt und für eine Regelung der Vorschubbewegung dieses Schweißzusatzwertstoffs genutzt.

Bei pulverförmigem Schweißzusatzwerkstoff wird, das momentane Volumen an Schweißzusatzwerkstoff, das sich im Einflussbereich des Laserstrahls zum Schmelzen befindet bestimmt und für eine Regelung des zugeführten Volumenstroms genutzt.

Es ist auch vorteilhaft im Strahlengang zwischen der jeweiligen Oberfläche auf der ein Werkstoffabtrag erfolgt oder Schweißzusatzwerkstoff in den Einflussbereich des Laserstrahls gefördert wird und der elektronischen Kamera dort mindestens ein optisches Filter angeordnet ist, mit dem ein Auftreffen elektromagnetischer Strahlung mit zumindest der Wellenlänge des Laserstrahls auf die elektronische Kamera verhinderbar ist. Besonders vorteilhaft kann dort das optische Filter so ausgebildet sein oder ein zusätzliches optischens Filter angeordnet sein, mit dem ein Auftreffen elektromagnetischer Strahlung, die infolge des Schmelzprozesses des Schweißzusatzwerkstoffs mittels der Laserstrahlung emittiert wird, auf die elektronische Kamera verhinderbar ist. Dabei dürfte es sich im Wesentlichen um NIR- und IR-Strahlung handeln. Das eine optische Filter oder mehrere optische Filter kann/können dabei Kanten- oder Bandpassfilter sein, die für elektromagnetische Strahlung mit Wellenlängen kleiner 550 nm optisch transparent sein sollten.

Am Laserbearbeitungskopf kann an drahtförmigem Schweißzusatzwerkstoff eine elektrische Stromquelle zur elektrischen Widerstandsbeheizung des jeweiligen drahtförmigen Zusatzwerkstoffs angeschlossen sein. Über eine Bestimmung des elektrischen Widerstands oder des durch den jeweiligen drahtförmigen Schweißzusatzwerkstoffs fließenden elektrischen Stroms oder mit einem Temperatursensor kann dabei die jeweils am drahtförmigen Schweißzusatzwerkstoff erreichte Temperatur bestimmt und anhand der jeweils bestimmten Temperatur über die elektronische Regel- und Steuereinheit eine Temperaturregelung am jeweiligen drahtförmigen Schweißzusatzwerkstoff durchgeführt werden, mit der eine ausreichende Vorwärmung das drahtförmigen Schweißzusatzwerkstoffs eingehalten und verhindert werden kann, dass der jeweilige drahtförmige Schweißzusatzwerkstoff in die Nähe seiner Schmelztemperatur erwärmt oder gar seine Schmelztemperatur erreicht wird, bevor eine Förderung in den Einflussbereich des Laserstrahls erfolgt ist.

Mit der gesamten Erfindung erschließen sich folgende Möglichkeiten:
- Das beschriebene Konzept ist gegenüber dem Stand der Technik sehr einfach, robust und günstiger zu realisieren und erfordert nur geringen Justage-Aufwand.
- Die koaxiale Anordnung ermöglicht richtungsunabhängiges Beschichten, z.B. für das Beschichten komplexer Bauteile oder für die Additive Fertigung. Durch die Nutzung mehrerer Zusatzdrähte (größere bestrahlte Oberfläche) koppelt mehr Energie im Zusatzwerkstoff ein, wodurch die Energieeffizienz sowie die Auftragsrate erhöht werden können. Zudem tritt zwischen den Zusatzdrähten Mehrfach-Reflexion auf, wodurch die Absorption zusätzlich erhöht wird.
- Durch die Nutzung mehrere Zusatzdrähte wird der Zusatzwerkstoff auf eine größere Fläche und somit gleichmäßiger dem Schmelzbad zugeführt, wodurch der Aufmischungsgrad mit dem Werkstückwerkstoff geringgehalten werden kann. Bei Prozessen mit einem Zusatzdraht kann es neben den Drähten zu höheren Schmelzbadtemperaturen und tiefer Aufmischung kommen. Die Position der Zusatzdrähte im Schmelzbad kann durch den Arbeitsabstand der Drahtdüse oder Winkel der Zusatzdrähte, mit denen die Zusatzdrähte in den Einflussbereich des Laserstrahls gefördert werden, variiert werden.
- Die Kollisionsschutzabschaltung verhindert große Schäden an Schweißdüse, Optik und Roboter.
- Es können verschiedene Zusatzdrahtwerkstoffe, mit unterschiedlichen Förderraten, in den Prozess geführt werden, um Mischungsverhältnisse einzustellen oder Gradientenschichten zu erzeugen.
- Höchstflexibel durch gleichzeitige Verwendung Draht- und Pulverförmiger Werkstoffe, die wiederum in unterschiedliche Werkstoffe unterteilt werden können.
- Durch die innenliegende Kühlung des Laserbearbeitungskopfes für den Einsatz extrem hoher Leistung und den Dauereinsatz geeignet.
- Verwendung nur einer "Standard" Optik (wenige optische Elemente) reduziert Kosten und ermöglicht zudem einen direkten Blick auf das Schmelzbad mittels koaxialer im Laserstrahl eingespiegelter Kameras zur Schmelzbadbeobachtung und Regelung.
- Geeignet für Laserleistungen ab 200 W bis sehr hohe Laserleistungen > 20 kW, dadurch werden sehr hohe Auftragsraten erreicht.
- Nutzung unterschiedlicher Hochleistungs-Festkörperlaser als Laserstrahlquelle (z.B.: Diodenlaser, Faserlaser, Scheibenlaser).
- Schlanke Bauform des Laserbearbeitungskopfes, ermöglicht eine gute Zugänglichkeit auch bei komplexen Bauteilen.
- Alternative Hochleistungs-Auftragsschweißverfahren zum Laser-Pulverauftrag-Schweißen
   ∘ Geringere Materialkosten und 100 %-ige Ausnutzung ggü. LPA
   ∘ Wesentlich sauberer und aus Arbeitsschutzsicht unbedenklicherer Prozess (kein Pulverhandling).
- Es kann auch eine Zoomoptik verwendet werden, um die Schweißraupenbreite zu variieren.

Nachfolgend soll die Erfindung beispielhaft näher erläutert werden.

### Dabei zeigen:

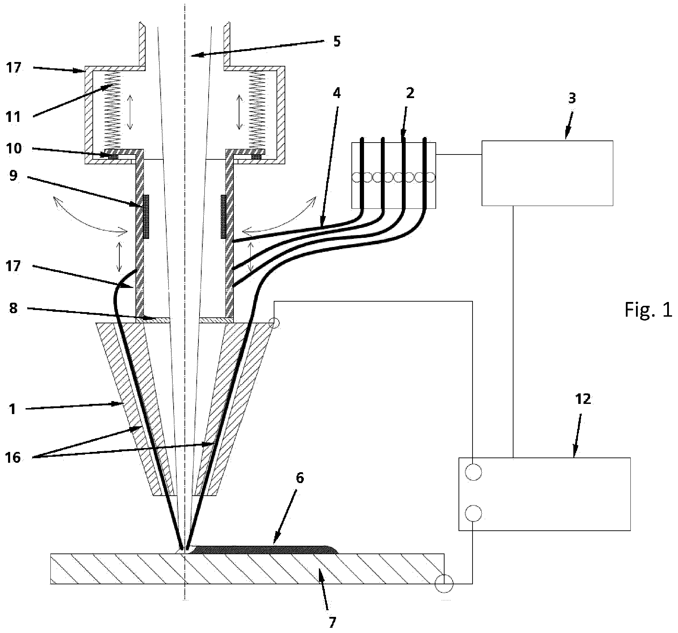

- Figur 1: in schematischer Form ein Beispiel einer Vorrichtung zum Laserauftragsschweißen;
- Figur 2: in schematischer Form ein weiteres Beispiel mit optischer Überwachung;
- Figur 3: Ansicht einer Schweißdüse mit vier zugeführten Zusatzdrähten von oben;
- Figur 4: Ansicht einer Schweißdüse mit vier zugeführten Zusatzdrähten von unten und
- Figur 5: Beispiele von Schweißdüsen mit einer unterschiedlichen Anzahl und Anordnung von Kanälen, durch die Zusatzwerkstoff in den Einflussbereich des Laserstrahls gefördert werden kann.

Mit Hilfe der Drahtförderer 2, die über die elektronische Regel- und Steuereinheit 3 angesteuert werden, wird drahtförmiger Schweißzusatzwerkstoff 4 über die Schweißdüse 1 zur zu bearbeitenden Oberfläche eines Werkstücks 7 gefördert und dort mittels eines Laserstrahls 5 aufgeschmolzen. Mit dem geschmolzenen Zusatzwerkstoff 4 wird eine Auftragsschicht 6 auf der Oberfläche ausgebildet.

Durch Überwachung der einzelnen elektrischen Ströme, die durch die Antriebsmotoren der einzelnen Drahtförderer 2 bei der Drahtförderung fließen, kann mit Hilfe der elektronischen Regel- und Steuereinheit 3 erkannt/gemessen werden, zu welchem Zeitpunkt und mit welcher Kraft der drahtförmige Schweißzusatzwerkstoff 4 in das Schmelzbad bzw. auf das Werkstück 7 auftrifft.

Zudem können auf Basis dieser elektrischen Ströme die Drahtvorschubgeschwindigkeiten für einzelne drahtförmige Schweißzusatzwerkstoffe 4 an den jeweiligen Drahtförderern 2 einzeln und unabhängig automatisch geregelt werden, um ein gleichmäßiges Auftreffen des drahtförmigen Schweißzusatzwerkstoffes aus den verschiedenen Richtungen, mit denen die drahtförmigen Schweißzusatzwerkstoffe 4 in den Einflussbereich des Laserstrahls 5 zum Schmelzen des Schweißzusatzwerkstoffs 4 zugeführt werden, zu gewährleisten. Außerdem kann so der Prozess stabil gehalten und die Anbindung der Beschichtung auf der Werkstückoberfläche verbessert werden.

Mit der elektrischen Stromquelle 12 kann der Schweißzusatzwerkstoff 4 durch elektrischen Kontakt zwischen Schweißdüse 1 und Werkstück 7 vorerwärmt werden. Die Schweißdüse 1 kann dazu über ein Isolierelement 8 elektrisch isoliert werden, damit der elektrische Strom der Stromquelle 12 über den drahtförmigen Schweißzusatzwerkstoff 4 nur von Schweißdüse 1 zum Werkstück 7 fließen kann. Der drahtförmige Schweißzusatzwerkstoff 4 dient als elektrischer Widerstand und erwärmt sich durch die elektrische Stromzufuhr und die Fließrichtung des elektrischen Stroms von der Schweißdüse 1 zum Werkstück 7. Mit einer nicht gezeigten Temperaturbestimmung am drahtförmigen Schweißzusatzwerkstoff 4, bevor dieser in den Einflussbereich des Laserstrahls 5 gelangt, kann eine Temperaturregelung erreicht werden, mit der eine ausreichende Vorwärmung erreicht und ein zu frühes unerwünschtes Schmelzen verhindert werden können.

Über mehrere Drahtförderer 2 können unterschiedliche metallurgische Zusammensetzungen für eine Beschichtung auf der Werkstückoberfläche drahtförmiger Schweißzusatzwerkstoffe 4 realisiert werden. Dadurch können unterschiedliche Legierungen, Legierungszusammensetzungen und auch Gradientenschichten ausgebildet werden, in denen sich die Werkstoffzusammensetzung kontinuierlich oder sukzessive verändert.

Über Dehnmessstreifen 9 kann eine Kollision des Laserbearbeitungskopfes erkannt und ein Prozessstopp eingeleitet werden. Dabei kann mindestens ein Dehnungsmessstreifen 9, beim gezeigten Beispiel sind es zwei, an einem elastisch verformbaren Bereich des Gehäuses 16 angebracht werden, der sich bei einem Anstoß des Laserbearbeitungskopfes elastisch verformen kann. Dies kann mit einem entsprechend mit einem Dehnungsmessstreifen 9 erfassten Messsignal, das der elektronischen Regel- und Steuereinheit 3 zugeführt wird, dazu genutzt werden, den Prozess abrupt zu beenden bzw. zu unterbrechen. Die Schweißdüse 1 kann zusätzlich über Spannfedern 11, die sich bei Krafteinwirkung stauchen, Kollisionen erkennen und einen Prozessstopp einleiten. Kleinere Kollisionen können damit in X-, Y- und Z-Richtung ausgeglichen werden. Dabei kann eine elektrische Kontaktanordnung 10, die im Normalbetrieb durch die Spannfedern 11 aufeinander gedrückt wird, eingesetzt werden. Über die elektrische Kontaktanordnung 10 fließt ein elektrischer Strom bei normalem Betrieb. Bei einer Kollision werden Spannfedern 11 gestaucht und der elektrische Kontakt an der Kontaktanordnung 10 geht dadurch verloren und es kann ein Prozessstopp eingeleitet werden. Der Wegausgleich in X-, Y- und Z-Richtung kann bis zum Prozessstopp über die Spannfedern 11 kompensiert werden.

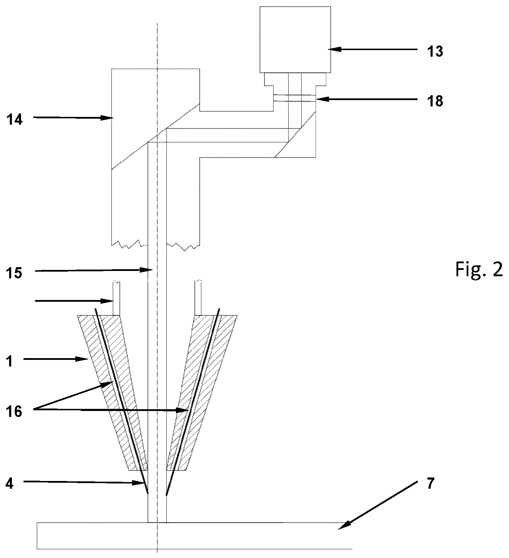

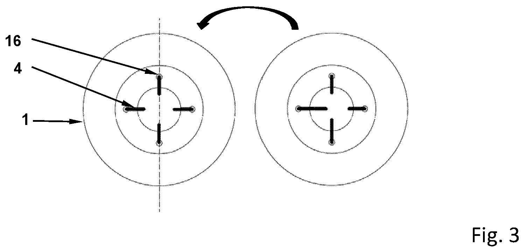

In Figur 2 ist gezeigt, wie mit einer elektronischen Kamera 13 der drahtförmige Schweißzusatzwerkstoff 4 beobachtet und positioniert wird. Die elektronische Kamera 13 nimmt über die Reflexionsstrahlung 15 und eine Kameraeinkopplung 14 die Ist-Position des drahtförmigen Schweißzusatzwerkstoffes 4 vor Schweißbeginn auf und kann diesen von einem ungleichmäßigen Stickout siehe Figur 3 rechts zu einem gleichmäßigen Stickout siehe Figur 3 links durch entsprechende Ansteuerung der jeweiligen Drahtförderer 2 so anpassen, dass die Stirnseiten des drahtförmigen Zusatzwerkstoffs 4, die aus verschiedenen Richtungen zugeführt werden, in gleichen oder vorgegebenen Abständen zueinander angeordnet bzw. ausgerichtet werden können. Weisen die Stirnseiten gleiche Abstände zueinander auf, kann eine homogene Beschichtung ausgebildet werden, was ganz besonders auf die Werkstoffzusammensetzung der aufgetragenen Beschichtung 6 zutrifft. Durch gezielte Einstellung der Abstände der Stirnseiten des drahtförmigen Zusatzwerkstoffs, der aus verschiedenen Richtungen zugeführt wird, kann Einfluss auf die jeweilige Breite der ausgebildeten Beschichtungsspur und/oder bei unterschiedlich in den Einflussbereich des Laserstrahls 5 geförderten drahtförmigen Zusatzwerkstoffen 4 kann durch entsprechende Ansteuerung der Antriebsmotoren der jeweiligen Drahtförderer 2 Einfluss auf die Legierungszusammensetzung in der Beschichtung 6 genommen werden.

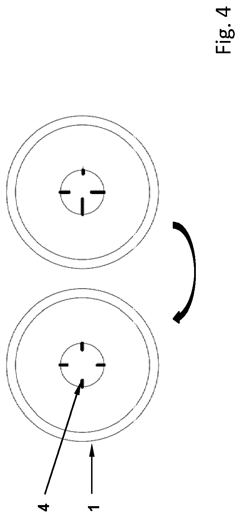

Figur 3 zeigt eine Schweißdüse 1 von unten und Figur 4 zeigt die Schweißdüse 1 von oben. Es werden dabei jeweils vier Drähte an Schweißzusatzwerkstoff 4 in Winkelabständen von 90° zugeführt. Dabei zeigen die jeweils linken Darstellungen Zustände, bei denen die vier drahtförmigen Schweißzusatzwerkstoffe 4 mit ihren aufeinander zuweisenden Stirnseiten gleiche Abstände zueinander aufweisen, so dass ein gleichmäßiges Abschmelzen bei einer mittigen Positionierung der optischen Achse des Laserstrahls 5 an den vier drahtförmigen Schweißzusatzwerkstoffen 4 erreicht werden kann. In den jeweils rechten Darstellungen der Figuren 3 und 4 ist einer der vier drahtförmigen Schweißzusatzwerkstoffe 4 so zugeführt worden, dass dessen vordere Stirnseite einen größeren Abstand zu den jeweils anderen drei Stirnseiten und zur optischen Achse des Laserstrahls 5 einhält, wodurch von diesem drahtförmigen Schweißzusatzwerkstoff 4 weniger oder gar kein Werkstoff während des Auftragsschweißens abgeschmolzen wird.

Über die elektronische Regel- und Steuereinheit 3 wird die Förderung der vier Zusatzdrähten aus drahtförmigem Schweißzusatzwerkstoff 4 so beeinflusst, dass die Abstände der Stirnseiten der Zusatzdrähte je nach Bedarf eingestellt und während des Beschichtungsprozesses eingehalten werden können.

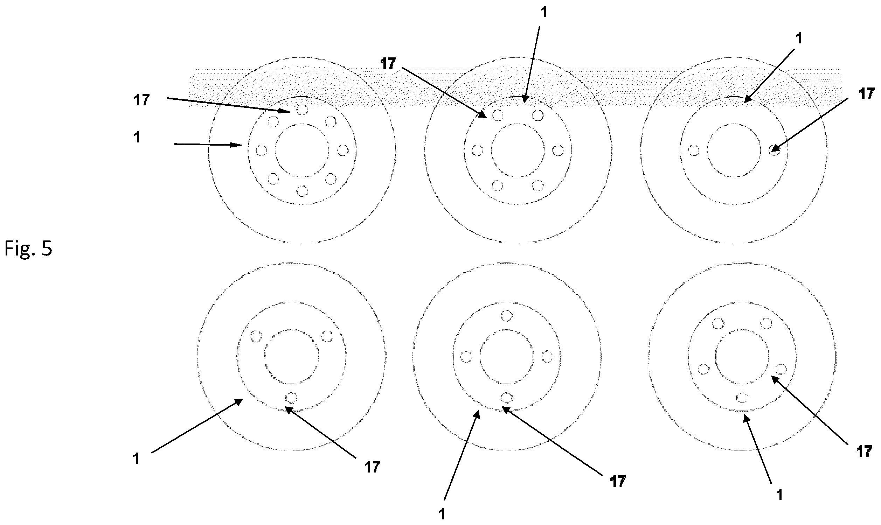

In Figur 5 ist gezeigt, wie an der Schweißdüse 1 eine unterschiedliche Anzahl von Kanälen 17 vorhanden sein kann, um eine unterschiedliche Anzahl an drahtförmigen Schweißzusatzwerkstoffen 4 durch die einzelnen Kanäle 17 aus unterschiedlichen Richtungen in den Einflussbereich des Laserstrahls 5 zu fördern. Bei Bedarf kann durch die Kanäle 17 teilweise auch pulverförmiger Schweißzusatzwerkstoff gefördert werden.

### Bezugszeichen

- 1: Schweißdüse
- 2: Drahtförderer
- 3: Elektronische Regel- und Steuereinheit
- 4: Drahtförmiger Schweißzusatzwerkstoff
- 5: Laserstrahl
- 6: Auftragsschicht
- 7: Werkstück
- 8: Isolierelement
- 9: Dehnungsmessstreifen
- 10: Kontaktanordnung
- 11: Spannfedern
- 12: Stromquelle für Heißdraht
- 13: Elektronische Kamera
- 14: Kameraeinkopplung
- 15: Reflexionsstrahlung
- 16: Gehäuse
- 17: Kanal

## Patentansprüche

1. Laserbearbeitungskopf mit einem Gehäuse und einer Schweißdüse, die innen hohl sind und durch die ein Laserstrahl (5) in Richtung auf eine Oberfläche geführt ist, wobei zumindest in der Schweißdüse (1) mindestens ein Kanal (16) durch den Schweißzusatzwerkstoff (4) in Richtung der Oberfläche auf der Schweißzusatzwerkstoff mittels Auftragsschweißen aufgebracht werden soll in den Einflussbereich des Laserstrahls (5) förderbar und mit der Energie des Laserstrahls (5) aufschmelzbar ist, **dadurch gekennzeichnet, dass** am Laserbearbeitungskopf das folgende Merkmal realisiert ist:
eine elektronische Kamera (13) ist so angeordnet und ausgebildet, den Bereich der Zuführung von Schweißzusatzwerkstoff (4) im Bereich der Düsenöffnung der Schweißdüse (1) zu erfassen und die elektronische Kamera (13) ist mit der elektronischen Regel- und Steuereinheit (3) verbunden und die elektronische Regel- und Steuereinheit(3) ist ausgebildet, anhand der erfassten Abbildung im Bereich der Düsenöffnung der Schweißdüse (1) die Vorschubbewegung mindestens eines drahtförmigen Zusatzwerkstoffs (4) oder den Volumenstrom von zugeführtem pulverförmigen Schweißzusatzwerkstoff (4) zu beeinflussen, wobei im Laserbearbeitungskopf eine Kameraeinkopplung (14) vorhanden ist, die ausgebildet ist eine Abbildung des Bereichs der Düsenöffnung der Schweißdüse (1) auf die elektronische Kamera (13) zu projizieren und in der elektronischen Regel- und Steuereinheit (3) eine Bilderkennungssoftware integriert ist, die ausgebildet ist, drahtförmigen oder pulverförmigen Schweißzusatzwerkstoff (4) zu erkennen, wobei zumindest eine jeweilige Position einer Stirnseite von drahtförmigem Schweißzusatzwerkstoff (4) in Bezug zum Einflussbereich des Laserstrahls (5), in dem ein Schmelzen von Schweißzusatzwerkstoff (4) möglich ist, bei drahtförmigem Schweißzusatzwerkstoff bestimmt und für eine Regelung einer Vorschubbewegung dieses Schweißzusatzwerkstoffs genutzt wird oder bei pulverförmigen Schweißzusatzwerkstoff (4) zumindest das momentane Volumen an Schweißzusatzwerkstoff, das sich im Einflussbereich des Laserstrahls (5) am Schmelzen befindet, bestimmt und für eine Regelung des zugeführten Volumenstroms genutzt wird.

2. Laserbearbeitungskopf nach Anspruch 1,
**dadurch gekennzeichnet, dass** im Strahlengang zwischen der jeweiligen Oberfläche auf der ein Werkstoffabtrag erfolgt oder Schweißzusatzwerkstoff (4) in den Einflussbereich des Laserstrahls (5) gefördert wird und der elektronischen Kamera (13) mindestens ein optisches Filter angeordnet ist, mit dem ein Auftreffen elektromagnetischer Strahlung mit zumindest der Wellenlänge des Laserstrahls (5) auf die elektronische Kamera (13) verhinderbar ist.

3. Laserbearbeitungskopf nach einem der vorhergehenden Ansprüche, **dadurch gekennzeichnet, dass** an drahtförmigem Schweißzusatzwerkstoff (4) eine elektrische Stromquelle (12) zur elektrischen Widerstandsbeheizung des jeweiligen drahtförmigen Zusatzwerkstoffs (4) angeschlossen ist und
über eine Bestimmung des elektrischen Widerstands oder des durch den jeweiligen drahtförmigen Schweißzusatzwerkstoffs oder mit einem Temperatursensor die jeweils am drahtförmigen Schweißzusatzwerkstoff (4) erreichte Temperatur bestimmt und anhand der jeweils bestimmten Temperatur über die elektronische Regel- und Steuereinheit (3) eine Temperaturregelung am jeweiligen drahtförmigen Schweißzusatzwerkstoff (4) durchführbar ist.

4. Laserbearbeitungskopf nach einem der vorhergehenden Ansprüche, **dadurch gekennzeichnet, dass** ein optisches Filter im Strahlengang zwischen der jeweiligen Oberfläche auf der ein Werkstoffabtrag erfolgt oder Schweißzusatzwerkstoff (4) in den Einflussbereich des Laserstrahls (5) gefördert wird und der elektronischen Kamera (13) angeordnet ist, mit dem ein Auftreffen elektromagnetischer Strahlung, die infolge des Schmelzprozesses des Schweißzusatzwerkstoffs (4) mittels der Laserstrahlung emittiert wird, auf die elektronische Kamera (13) verhinderbar ist.

5. Laserbearbeitungskopf nach einem der vorhergehenden Ansprüche, **dadurch gekennzeichnet, dass** mindestens eines der folgenden Merkmale realisiert ist:
i) durch den mindestens einen Kanal (16) drahtförmiger Schweißzusatzwerkstoff (4) mittels eines dem jeweiligen durch einen Kanal (16) zugeführten drahtförmigen Schweißzusatzwerkstoff (4) ein Drahtförderers (2) zugeordnet ist, der mittels eines Antriebsmotors in den Einflussbereich des Laserstrahls (5) zuführbar ist und an dem jeweiligen Antriebsmotor für den Drahtvorschub eine Einrichtung zur Bestimmung des durch den Antriebsmotor fließenden elektrischen Stromes während der Drahtförderung vorhanden ist, deren Messsignale an eine elektronische Regel- und Steuereinheit übertragbar sind und die Regel- und Steuereinheit (3) ausgebildet ist, mit dem gemessenen elektrischen Strom die Vorschubbewegung des drahtförmigen Schweißzusatzwerkstoffs (4) zu beeinflussen;
ii) an einem elastisch verformbaren Bereich des Gehäuses (17) oder der Schweißdüse (1) mindestens ein Dehnungsmesstreifen (9) angebracht ist, der mit der elektronischen Regel- und Steuereinheit (3) verbunden ist und die elektronische Regel- und Steuereinheit (3) ausgebildet ist, bei Erreichen eines vorgebbaren Messsignalschwellwertes des Messsignals des mindestens einen Dehnungsmessstreifens (9) eine Beendigung des Bearbeitungsprozesses zu initiieren;
iii) am Gehäuse (17) mindestens eine Kontaktanordnung (10) so angeordnet und ausgebildet ist, dass bei einem Anstoß oder Anhaftung des Laserbearbeitungskopfes an die jeweilige Oberfläche eines Werkstücks (7) oder eines additiv zu fertigenden Bauteils oder sonstiger Komponenten, der elektrische Kontakt getrennt wird und mit der elektronischen Regel- und Steuereinheit (3) bei Trennung des elektrischen Kontaktes an der elektrischen Kontaktanordnung (10) eine Beendigung des Bearbeitungsprozesses initiiert wird.

## Claims

1. A laser machining head with a housing and a welding nozzle, which are hollow inside and through which a laser beam (5) is guided towards a surface, at least in the welding nozzle (1) at least one channel (16) through which welding filler material (4) can be conveyed into the region of influence of the laser beam (5) in the direction of the surface on which the filler material is to be applied by build-up welding, and can be melted by the energy of the laser beam (5), **characterised in that** the following feature is implemented on the laser processing head:
an electronic camera (13) is arranged such and configured to detect the region of the feed of welding filler material (4) in the region of the nozzle opening of the welding nozzle (1) and the electronic camera (13) is connected to the electronic regulation and control unit (3) and the electronic regulation and control unit is configured, based on the image captured in the region of the nozzle opening of the welding nozzle (1), to influence the feed movement of at least one wire-shaped filler material (4) or the volume flow of any fed powdered welding filler material (4), with a camera coupling (14) being provided in the laser machining head, which is configured to project an image of the area of the nozzle opening of the welding nozzle (1) onto the electronic camera (13) and image recognition software being integrated in the electronic regulation and control unit (3), which is configured to recognise wire-shaped or powder-shaped welding filler material (4), with at least one respective position of an end face of wire-shaped welding filler material (4) being detected in relation to the region of influence of the laser beam (5) in which welding filler material (4) can be melted, being determined for wire-shaped welding filler material (4) and for regulating a feed movement of this welding filler material or of powder-shaped welding filler material (4), at least the current volume of welding filler material that is in the region of influence of the laser beam (5) and is used to regulate the volume flow supplied.

2. The laser machining head according to claim 1,
**characterised in that** at least one optical filter is arranged in the beam path between the respective surface on which material is removed or welding filler material (4) is conveyed into the region of influence of the laser beam (5) and the electronic camera (13), which prevents electromagnetic radiation with at least the wavelength of the laser beam (5) from striking the electronic camera (13).

3. The laser machining head according to any one of the preceding claims, **characterised in that** an electric current source (12) is connected to a wire-shaped welding filler material (4) for the electric resistance heating of the respective wire-shaped filler material (4) and
the temperature reached respectively at the wire-shaped welding filler material (4) is determined by determining the electric resistance or the respective wire-shaped welding filler material or by a temperature sensor and a temperature regulation at the respective wire-shaped welding filler material (4) can be carried out on the basis of the respectively determined temperature by the electronic regulation and control unit (3).

4. The laser machining head according to any one of the preceding claims, **characterised in that** an optical filter is arranged in the beam path between the respective surface on which material is removed or welding filler material (4) is conveyed into the region of influence of the laser beam (5) and the electronic camera (13), with which the impact of electromagnetic radiation emitted as a result of the melting process of the welding filler material (4) via the laser beam on the electronic camera (13) can be prevented.

5. The laser machining head according to any one of the preceding claims, **characterised in that** at least one of the following features is implemented:
i) wire-shaped welding filler material (4) is fed through the at least one channel (16) via a wire feeder (2) assigned to the wire-shaped welding filler material (4) fed through a channel (16), which can be fed into the region of influence of the laser beam (5) via a drive motor, and a device for determining the electric current flowing through the drive motor during the wire feed is provided on the respective drive motor for the wire feed, the measuring signals of which can be transmitted to an electronic regulation and control unit and the regulation and control unit (3) is configured to influence the feed movement of the wire-shaped welding filler material (4) with the measured electric current;
ii) at least one strain gauge (9) is attached to an elastically deformable region of the housing (17) or of the welding nozzle (1), which strain gauge is connected to the electronic regulation and control unit (3) and the electronic regulation and control unit (3) is configured to initiate a termination of the machining process when the measurement signal of the at least one strain gauge (9) reaches a predeterminable measured signal threshold value;
iii) at least one contact arrangement (10) is arranged and configured on the housing (17) such that, in the event that the laser machining head impacts against or adheres to the laser machining head to the respective surface of a workpiece (7) or an additively manufactured component or other components, the electrical contact is disconnected and, upon disconnection of the electrical contact at the electrical contact arrangement (10), the electronic regulation and control unit (3) initiates termination of the processing operation.

## Revendications

1. Tête laser d'usinage avec une enveloppe et une buse de soudage dont l'intérieur est creux et à travers lesquels un faisceau laser (5) est guidé en direction d'une surface, dans laquelle au moins un canal (16), grâce auquel du matériau d'apport de soudage (4) peut être acheminé dans la région d'influence du faisceau laser (5) et peut être fondu avec l'énergie du faisceau laser (5) en direction de la surface sur laquelle du matériau d'apport de soudage doit être appliqué au moyen d'un soudage par dépôt, est fourni au moins dans la buse de soudage (1), **caractérisée en ce que** la caractéristique ci-dessous est réalisée au niveau de la tête laser d'usinage :
une caméra électronique (13) est agencée et conçue pour enregistrer la région d'alimentation en matériau d'apport de soudage (4) dans la région de l'orifice de buse de la buse de soudage (1), et la caméra électronique (13) est connectée à l'unité de régulation et de commande électronique (3), et l'unité de régulation et de commande électronique (3) est conçue pour, à l'aide de l'image détectée dans la région de l'orifice de buse de la buse de soudage (1), influencer le mouvement d'avance d'au moins un matériau d'apport (4) sous forme de fil ou le débit volumique de matériau d'apport de soudage (4) sous forme de poudre alimenté, dans laquelle un couplage de caméra (14) est présent dans la tête laser d'usinage, lequel couplage est conçu pour projeter une image de la région de l'orifice de buse de la buse de soudage (1) sur la caméra électronique (13), et un logiciel de reconnaissance d'image est intégré dans l'unité de régulation et de commande électronique (3), lequel logiciel est conçu pour reconnaitre un matériau d'apport de soudage (4) sous forme de fil ou sous forme de poudre, dans laquelle au moins une position respective d'une face avant du matériau d'apport de soudage (4) sous forme de fil par rapport à la région d'influence du faisceau laser (5) au sein de laquelle est possible une fusion du matériau d'apport de soudage (4) est déterminée pour du matériau d'apport de soudage sous forme de fil et est utilisée pour la régulation d'un mouvement d'avance dudit matériau d'apport de soudage ou, pour du matériau d'apport de soudage (4) sous forme de poudre, au moins le volume actuel de matériau d'apport de soudage qui se trouve dans la région d'influence du faisceau laser (5) lors de la fusion est déterminé et est utilisé pour la régulation du débit volumique alimenté.

2. Tête laser d'usinage selon la revendication 1, **caractérisée en ce qu'**au moins un filtre optique, grâce auquel l'impact d'un rayonnement électromagnétique d'au moins la longueur d'onde du faisceau laser (5) sur la caméra électronique (13) peut être évitée, est agencé sur le trajet optique entre la surface respective, sur laquelle un enlèvement de matière a lieu ou sur laquelle un matériau d'apport de soudage (4) est acheminé dans la région d'influence du faisceau laser (5), et la caméra électronique (13).

3. Tête laser d'usinage selon l'une quelconque des revendications précédentes, **caractérisée en ce qu'**une source de courant électrique (12) permettant de chauffer par résistance électrique le matériau d'apport de soudage (4) sous forme de fil respectif est raccordée au matériau d'apport de soudage (4) sous forme de fil et
la température atteinte respectivement au niveau du matériau d'apport de soudage (4) sous forme de fil est déterminée par une détermination de la résistance électrique ou du courant électrique circulant à travers le matériau d'apport de soudage sous forme de fil respectif ou grâce à un capteur de température, et une régulation de la température peut être mise en œuvre au niveau du matériau d'apport de soudage (4) sous forme de fil respectif par l'intermédiaire de l'unité de régulation et de commande électronique (3) à l'aide de la température déterminée respective.

4. Tête laser d'usinage selon l'une quelconque des revendications précédentes, **caractérisée en ce qu'**un filtre optique, grâce auquel il est possible d'éviter l'impact, sur la caméra électronique (13), d'un rayonnement électromagnétique émis à la suite de l'opération de fusion du matériau d'apport de soudage (4) au moyen du rayonnement laser, est agencé sur le trajet optique entre la surface respective, sur laquelle a lieu un enlèvement de matière ou sur laquelle du matériau d'apport de soudage (4) est acheminé dans la région d'influence du faisceau laser (5), et la caméra électronique (13).

5. Tête laser d'usinage selon l'une quelconque des revendications précédentes, **caractérisée en ce qu'**au moins une des caractéristiques ci-dessous est réalisée :
i) à travers le au moins un canal (16), un matériau d'apport de soudage (4) sous forme de fil est associé à un dispositif d'alimentation en fil (2), par l'intermédiaire d'un matériau d'apport de soudage sous forme de fil (4) qui est acheminé à travers un canal (16), lequel dispositif d'alimentation en fil peut être acheminé au moyen d'un moteur d'entraînement jusque dans la région d'influence du faisceau laser (5), et un dispositif permettant de déterminer le courant électrique circulant dans le moteur d'entraînement pendant l'alimentation en fil est présent au niveau du moteur d'entraînement respectif afin de faire avancer le fil, les signaux de mesure dudit dispositif pouvant être transmis à une unité de régulation et de commande électronique, et l'unité de régulation et de commande (3) est conçue pour influencer le mouvement d'avance du matériau d'apport de soudage (4) sous forme de fil avec le courant électrique mesuré ;
ii) au moins une jauge de contrainte (9) est installée au niveau d'une région élastiquement déformable de l'enveloppe (17) ou de la buse de soudage (1), laquelle jauge est reliée à l'unité de régulation et de commande électronique (3) et l'unité de régulation et de commande électronique (3) est conçue pour initier un achèvement de l'opération d'usinage lorsqu'une valeur de seuil de signal de mesure prédéfinissable du signal de mesure de la au moins une jauge de contrainte (9) est atteinte ;
iii) au moins un système de contact (10) est agencé et réalisé au niveau de l'enveloppe (17) de sorte que, en cas de collision ou d'adhérence de la tête laser d'usinage sur la surface respective d'une pièce à usiner (7) ou d'un composant à fabriquer de manière additive ou d'autres composants, le contact électrique est déconnecté et un achèvement de l'opération d'usinage est initiée par l'unité de régulation et de commande électronique (3) lors de la déconnexion du contact électrique au niveau du système de contact électrique (10).
